# EUROPEAN PATENT SPECIFICATION

(11) **EP 4 244 522 B1**
(45) Date of publication and mention of the grant of the patent: **06.05.2026**
(21) Application number: 21827649.1
(22) Date of filing: 16.11.2021
(51) Int. Cl.: F17C 1/12, F17C 1/00

(54) **MODULAR CELLULAR SOLID GAS STORAGE PLATFORM SYSTEM**
MODULARES ZELLULARES FESTSTOFF-GAS-SPEICHERPLATTFORMSYSTEM
SYSTÈME DE PLATEFORME DE STOCKAGE DE GAZ SOLIDE CELLULAIRE MODULAIRE

(30) Priority: 16.11.2020 PT 2020116886
(43) Date of publication of application: 20.09.2023
(73) Proprietor: Universidade Do Porto, 4099-002 Porto (PT)
(72) Inventor: FERNANDES, Antonio Augusto, 4200-465 Porto (PT)
(74) Representative: Couto, Cláudia
(86) International application number: PCT/IB2021/060590
(87) International publication number: WO 2022/101886

(56) References cited:
- ES-U- 1 240 505
- US-A1- 2010 059 528
- US-A1- 2015 014 323
- US-A1- 2015 336 680
- US-A1- 2016 238 193
- US-A1- 2017 159 883
- US-B1- 6 206 027
- US-B1- 6 668 561

## Description

### Field of the invention

The present invention is related to gaseous fuels storage in general and hydrogen in particular, in its different forms (compressed gas, cold and cryo-compressed and liquid), both for applications in transportation (land, marine, aerospace), stationary (residential and industrial buildings), portable power and others.

### State of the art

The increase in global energy demand and the current trend towards decreasing fossil fuels dependence will result in the redefinition of national long-term energy strategies and lead to an increasing share of renewable energies. Hydrogen is becoming increasingly acknowledged as an important energy carrier and is considered instrumental to the hydrogen economy. Hydrogen has the highest energy per mass of any fuel; however, its low ambient temperature density results in a low energy per unit volume, requiring the development of advanced storage methods with higher energy density, which poses a considerable challenge for its widespread safe application. Thus, economic and efficient hydrogen storage is considered by many authors a key enabling technology for the advancement of hydrogen as a fuel for applications in sectors as diverse as transportation (land, marine, aerospace), stationary (residential and industrial buildings), portable power and others.

The use of hydrogen in a fuel cell /internal combustion engine of a vehicle, combines emissions-free driving with a high range potential, while simultaneously allowing a quick refueling (within 3-5 minutes) for the current refueling standard, for tank systems operated with compressed hydrogen, at a working pressure of 70 MPa).

The storage tank system plays a crucial role and has a significant influence on the range and refueling time of a vehicle. Hydrogen is predominantly stored in compressed form in passenger vehicles. Modern vehicles have driving ranges from 300 to more than 1000 Km, thus a vehicle with an alternative powertrain must have equivalent ranges for users to find it attractive. Further, the filling station network must have the same density, as the current network of conventional petrol stations. Since vehicles have to operate in diverse markets with diverse climacteric conditions it is expected that the tank system is capable to operate at temperatures between -40 and 85 °C (Maus,2008).

Onboard hydrogen storage of 5-13 kg of H₂ is required to enable a vehicle driving range greater than 500Kms, using fuel cell or combustion engines (Hua,2010; Kunze 2014). The US DRIVE Partnership and US Department of Energy hydrogen roadmap refers that *"storage systems face challenges related to cost, durability*/*operability, charge*/*discharge rates, fuel quality, efficiency, and safety, which may limit widespread commercialization of hydrogen vehicles. Although hydrogen storage systems have shown continuous improvement since 2005 and many targets have been met independently, further advancements are needed to meet all of the performance targets simultaneously"* (USDRIVE,2017).

High pressure gaseous hydrogen storage offers the simplest solution in terms of infrastructure requirements and has become the most popular and highly developed method (Zheng,2012; Hua,2010; Sankir,2018). The disadvantages are the system larger volume and use of high pressure, requiring novel approaches in the design of the storage system and its integration in the body in white of the vehicles, which is quite challenging. Safety is of primary concern in an ideal storage system, in particular requirements such as toxicity, flammability, danger of explosion etc. The pressure required is extremely high and demands an extremely robust tank. This limits the design of the tank (a cylinder in current applications), making its integration into the vehicle architecture more difficult (Rivard ,2019; Stolten,2016).

The kinetics of compressed gas (rate at which the system releases/stops hydrogen flow upon demand) is ideal, since the fuel flow can increase or decrease in a virtually limitless manner (Rivard, 2019). However, there are other performance criteria that should be taken into account, when evaluating an ideal hydrogen storage system for mobility, in particular high volumetric and gravimetric densities (defined as the amount of hydrogen stored per unit volume of the storage system and weight). Pure hydrogen at ambient temperature and pressure has good gravimetric but poor volumetric energy densities of 120 MJ/kg (100 wt %) and 0.01 MJ/L respectively, in comparison with petrol and diesel 38 wt % and 35 MJ/L (Rivard et al.,2019; USDRIVE, 2017).

To achieve the required performance in terms of autonomy and weight efficiency, hydrogen can be stored under different forms as summarized in Table 1 (Barthelemy 2017; Zhou,2005; Dolci, 2018):
- Compressed form at pressures ranging from 20 MPa to 100 MPa, in carbon fibres composite pressure vessels, when lightweight capacity is needed or in metal pressure vessels.
- Liquefied cryogenic form at -253 °C when large quantity of hydrogen shall be transported, and high gravimetric storage performance is needed.
- Cryo-compressed form at intermediate low temperature (about -233 °C) and high pressure (at least 30 MPa) to achieve higher gravimetric and volumetric performance.
- Solid form in hydrides.

**Table 1 Physical storage of hydrogen options (Kunze,2014)**

| Physical Storage | | |
|---|---|---|
| Compressed | Cryo-compressed | Liquid |
| Single or multitank pressure vessel system, 35/70 MPa | Super-insulated cryogenic pressure vessel system, 35 MPa | Super-insulated low pressure cryogenic vessel system, 1 MPa |
| Small series production level | Prototype level | Demonstration Level |

To reduce the required storage volume, the volumetric energy density of gaseous hydrogen must be increased by means of compression. For example, at an ambient temperature of 20 °C, hydrogen has a density of 0.084 kg/m3, at a pressure of 0.1013 MPa, whereas this value increases to 7.797 kg/m3 for a pressure of 10 MPa (Stolten, 2016). At 100 MPa the volumetric energy density would be 49.938 kg/m3. However, the required compression depends on the type of compression and the applied cooling. As referred, a vehicle with a compressed hydrogen tank system must be able to operate under various climatic conditions (design temperatures for a tank system lie typically between -40 and 85 °C). This places stringent requirements on the tightness of the seals at high pressures and simultaneously low temperatures, as well as the permeation/diffusion of hydrogen through plastics at higher temperatures (Stolten, 2016). The leakage and permeation behavior determines the tightness of the system at the different operating states, that must be verified and validated through extensive mechanical and safety testing. The storage tank is designed for a bursting pressure test of 2,25 x design pressure (157.5 MPa for a pressure of 70 MPa) (EU,2010). The tank components should also be burst tested. The adopted tank design philosophy is generally *"leak before break",* which means that if the tank is damaged it is allowed to leak but not burst and release the stored mechanical energy; this is simulated by a ballistic test to mimic the penetration of a sharp vehicle component during a crash (USDRIVE,2017; Stolten, 2016) . Fire safety should also be demonstrated: the gas pressure increase in the event of a fire is controlled through a pressure relief valve. Finally, a vehicle with a high-pressure hydrogen tank system must pass the same crash tests as a conventional vehicle. No tank system leakage is permitted. The service life of a tank system for high-pressure hydrogen is generally 20 years, certified according to European Union regulations or other countries regulations (EU,2010).

Compressed gas storage systems (pressure range 35-70 MPa and usable mass of stored hydrogen of 4-9.5Kg, with driving ranges up to 750 Kms), have been demonstrated in hundreds of prototype fuel cell vehicles and vehicle concepts, by major automotive OEMs, and are commercially available at low production volumes. The storage tanks within these systems, have been certified worldwide according to ISO 11439 (Europe), ANSI/AGA HGV2 (U.S) and Reijikijun Betten (Iceland) standards, and approved by TUV (Germany) and KHK (Japan) (USDRIVE, 2017).

Hydrogen can also be stored in liquid form. In this case, the hydrogen has a temperature of approx. -253 °C and a density of approximately 70 kg/m³. The low temperature requires an expensive insulation of the container/tank since, heat input would cause the pressure in the container to rise to very high levels, due to the evaporation of hydrogen.

The storage in liquid form can also be combined with high-pressure storage as a hybrid system in order to achieve greater storage densities (Kunze,2014). For a liquid hydrogen container, the hydrogen release when the vehicle is parked for longer periods is significant, due to the heat input into the container (boil-off or dormancy) with an hydrogen loss of approx. 2-3 vol.% per day (USDRIVE,2017). Due to the design of the compressed gas storage tank and higher wall thickness the container is more stable to external loads than liquid hydrogen.

A hydrogen storage system must perform numerous secondary safety functions that control the flow of the compressed gas during the vehicle operation and also any leakage due to malfunction of the system. Thus, in addition to the main tank/container various other components are needed in particular:
- The tank valve unit which is typically screwed directly into the container or containers. It integrates an array of safety-related functions. The tank valve unit also includes the temperature sensor, which among other things, can be used to control temperature variation during refueling and operation.
- The pressure regulating unit which regulates the tank system pressure.

There are currently in the market four types of cylindrical containers for storing hydrogen in vehicles, in the form of compressed gas (Rivard,2019; Shirosh, 2002), as described in table 2.

**Table 2 Types of compressed hydrogen container**

| Type of container | Material | Typical pressure, MPa | Gravimetric density wt % |
|---|---|---|---|
| I | Metal | 30 | 1, 7 |
| II | Metal plus composite overwrap | 20 | 2,1 |
| III | Metal liner, full composite overwrap | 70 | 4,2 |
| IV | All composite construction | 70 | 5, 7 |

The container liner, which is in direct contact with the hydrogen gas, guarantees gas tightness. Metallic liners that are used in type III containers are usually made of aluminum alloy. As compared to polymer liners, metallic liners generally have the advantage that the gas permeation is negligible. Polymer liners on the other hand, which are generally made of a thermoplastic, have the best mechanical properties for pressure containers, which is why only type IV containers currently meet all of the legal requirements, including cycle stability, being used in current vehicles with a storage pressure of 70 MPa. The QUANTUM Type IV, TriShield TM cylinder (comprising a seamless, one piece, permeation resistant, cross-linked ultra-high molecular weight polymer liner, overwrapped with multiple layers of carbon fiber/epoxy laminate and a proprietary external protective layer for impact resistance) is considered the current state of the art of compressed hydrogen stored technology (Quantum,2020; Shirosh,2012). A Quantum Type IV cylinder for a passenger vehicle with a volume of 120 L, storing 10,5 Kg of hydrogen at 70 MPa, has a diameter of 340 mm and 2182 mm length and a weight of 112 Kg. It is noted, as comparison, that a pack of batteries can weight around 500 kg (example Tesla) and in an urban bus the weight can be over 3000Kg.

The compression of the gas during filling heats it in the container, thus requiring a compensation of this temperature effect. A tank system at 70 MPa, at a reference temperature of 15 °C, achieves a maximum storage density of 40 kg/ m³. If the gas is heated during filling, then the target filling pressure is correspondingly adapted upward to up to 87.5 MPa, at the maximum permissible temperature of 85 °C (ISO 15869). To respect the upper temperature limit of 85 °C under all ambient conditions, it is necessary to precool the gas at the filling station or use other cooling methods. Further, in order to avoid overfilling, tanks are on average underfilled by 10 %. DOE/USDRIVE targets for compressed hydrogen storage, summarized in Table 3, provide an indication of the expected potential performance of current storage systems in the future (Hua et al.,2010; USDRIVE,2017).

**Table 3 Performance metrics/targets for onboard hydrogen storage for light duty vehicles**

| Performance metric | Units | 2020 | 2025 T | Ultimate |
|---|---|---|---|---|
| System gravimetric | KWh/Kg (KgH²/Kg system | 1,5 (0, 045) | 1,8 (0, 055) | 2,2 (0, 065) |
| Capacity: usable specific energy | | | | |
| System volumetric | KWh/L (KgH²/L system | 1,0 (0, 030) | 1,3 0, 040 | 1,7 (0, 050) |
| Capacity: usable energy density | | | | |

Cryogenic vessels have been used for the storage and transportation of gases. Hydrogen needs to be liquefied at -253 °C. Up to 40% of the energy content can be lost (in comparison with 10% energy loss with compressed hydrogen). The main advantage associated to cryogenic storage is the density of liquid and thus storage efficiency. Liquid hydrogen tanks can store 0.070 kg/L of liquid hydrogen (volumetric capacity 70,8 Kg/m³) compared to 0.030 kg/L of compressed gas tanks (volumetric capacity ~40 Kg/m³ and gravimetric capacity up to ~ 13 wt%) (Saba Niaz et al.,2015). However, liquid hydrogen is difficult to store over a long period because of product loss by evaporation (dormancy period). As a consequence, it is not a preferred solution for on-board storage in vehicles but is more used for gas delivery (Stolten,2016; Rivard,2019; Kunze, K. 2012 and 2014).

Cryo-compression of hydrogen is a hybrid method that combines compressed gas and liquid hydrogen (Kunze, K. 2014). The tank must be designed to hold a cryogenic fluid and to withstand internal pressure (30 MPa). Cryo-compressed H₂ storage systems have high density (5.4 wt%) and feasible costs. With rising storage size and capacity, the high physical density of cryogenic compressed hydrogen gas outbalances the volumetric effort needed for auxiliary components (such as insulation material, valves, pressure release devices, internal and external heat exchangers). The advantage in size, and consequently cost and weight, becomes more relevant when applied to vehicles with a high energy demand such as long-distance large passenger vehicles, trucks, light duty commercial vehicles, city and transit busses, as well as heavy duty vehicles (Kunze, 2014; Stolten,2016).

A hypothetical spherical tank surrounded by 25 mm of insulation material, capable of holding 5 kg of hydrogen, does not exceed volumetric and gravimetric energy densities of 6.4 MJ/L and 7.5 wt%, respectively (Rivard et al. (2019). From an efficiency standpoint, cryo-compression is superior to liquid storage. Dormancy is a challenge for storage systems that operate at temperatures lower than ambient. As the temperature in the tank increases after extended periods of parking, the hydrogen pressure increases and needs to be released when the maximum pressure rating of the tank is exceeded. The period of time prior to this release (or boil-off point) is defined as the dormancy time (USDRIVE ,2017).

Ambient temperature compressed gas storage is currently the most mature storage technology for use onboard vehicles and is considered the most viable short-term approach, while the concept of storing hydrogen at sub-ambient temperatures will be explored as a long-term strategy, to better meet DOE onboard storage targets (USDRIVE 2017; Hua,2010; Shirosh,2002). However, there are several challenges and barriers to overcome the practical implementation of those strategies. In this context several research gaps have been identified in different fora, as described in Table 4, that need to be addressed to develop in the future, novel technically and economically feasible hydrogen-storage technologies.

**Table 4 Research gaps and technical barriers**

| Source | Research Gaps | References |
|---|---|---|
| *U.S. DRIVE Partnership roadmap* | 1.Neither liquid based nor compressed systems (including cold/cryo-compressed tanks) currently meet the system level gravimetric and volumetric hydrogen capacity targets and cost targets, which is a crucial gap for the automotive industry | USDRIVE, 2017 |
| | 2.For cryogenic systems, the loss of usable hydrogen during dormancy is a key challenge. | |
| | 3.Liquefying or compressing hydrogen requires a significant amount of energy, resulting in a gap to meeting the energy efficiency targets 4.The weight, volume, performance, operating temperature, and cost constraints limit the choice of construction materials and fabrication techniques for high-pressure containment of compressed hydrogen and other hydrogen storage approaches | |
| | 5.The materials must be resistant to hydrogen embrittlement, permeation, and corrosion | |
| | 6.The cost of valves, piping, and safety equipment (Balance-of-Plant Cost) is often a significant contributor to the system weight and cost (up to 30% of the tank system) | |
| | 7.The high number of parts (the balance-of-plant) increase assembly cost and raises reliability and durability issues | |
| | 8.For most hydrogen storage options, including compressed, cryogenic, and materials-based systems, thermal management within the system is a key issue. For compressed gas systems the main challenge is the efficient heat removal during refueling to avoid heating the storage vessel over 85°C and potentially damaging the liner and/or other components. | |
| | 9.The manufacturing cost of high-pressure tanks is significant due to high material costs | |
| | 10.For current designs, the mass of the tank required to withstand the pressure and temperature of normal operation, fueling, and environmental stresses is too high to allow the total system to meet the gravimetric capacity target | |
| *Workshop on hydrogen safety organized by JRC,Petten* | 1.Hydrogen effect (damage) on metallic materials such as: hydrogen induced cracking (HIC), hydrogen reaction (HR), Hydrogen Embrittlement (HE) or Hydrogen Stress cracking (HSC) | Dolci et al. (2018) |
| | 2.Hydrogen damage of polymers | |
| | 3.Ageing models for lifetime assessment of materials (damage, hydrogen embrittlement causing loss of fracture toughness, fatigue); effect of overheating | |
| | 4.Gas permeation and liner collapse | |
| | 5.Tightness of components connections(bosses) | |
| | 6.NDT techniques to ensure constant manufacturing quality | |
| | 7.Fire safety (modelling tools of fire scenarios, and new fire solutions design for smart and reliable fire detection and protection | |
| | 8.Modelling damage induced by impacts and lifetime assessment (including metal liner) and structural health monitoring | |
| | 9.Improvement of insulation function of Cryo-Compressed storage | |
| | 10.Recycling (design for recycling of storage system) | |
| | 11.Heat management during filling | |

From the systems known from the state of the art to store hydrogen, the following were considered to be relevant to highlight the problem solved by the present invention.

Documents US 2005/0211573 and CN101685870A are based on solid state material-based storage technologies (Metal Hydrides), a distinct physical principle of the present invention. These patents disclose systems where the hydrogen atoms are chemically bonded to other metal or semimetal atoms in a solid-state solution. Material-based storage technologies include metal hydrides, sorbent-based materials. Complex and conventional metal hydrides store hydrogen in solid form where hydrogen atoms are chemically bonded to other metal or semimetal atoms. Metal hydrides can store atomic hydrogen in the metallic crystal structure. In the case of interstitial metal hydrides, the molecular hydrogen in the gas phase splits into atomic hydrogen on the surface of the material and then it diffuses into the atomic structure of the host metal. Many different metallic compounds exist that can absorb hydrogen in this manner. In most cases, however, the storage does not occur at moderate temperature and pressure for practical storage purposes and the mass of the absorbed hydrogen is only a small fraction of the mass of the host metal.

Hydrogen can be stored in vast variety of materials under diverse conditions of pressure and temperature or can be stored in certain materials using a process of chemical storage or by physisorption. Hydrogen can be stored through chemical storage in Metal Hydrides. Metal hydrides, are compounds containing metal (s) and hydrogen (ex. magnesium hydride). They have the unique ability to absorb hydrogen and release it later, either at room temperature or through heating of the tank. Metal hydrides tend to bind strongly with hydrogen requiring high temperatures of around 120-200 °C to release their hydrogen content.

The efficiency of metal hydrides is not optimal. High temperatures during fueling and operation imply energy losses and bulky insulation. The safety of hydrides is also questionable. For instance, magnesium hydride is extremely reactive and may ignite when exposed to air or water. The concept of both inventions adopts a modular hydrogen storage system comprising a plurality of discrete physical chunks/modules of metal hydrides that store the hydrogen which can be delivered independently of the other modules.

The present invention adopts a product-platform philosophy based on a hybrid integral/modular architecture, comprising different types of functionalization (hydrogen storing, cooling, insulating, packaging functions) fabricated with periodic cellular solids (metals or other materials). Moreover, the present invention is based on compressed molecular hydrogen storage at ambient temperature or other thus not comparable to the mentioned patents.

Compressed gas storage is currently the most mature storage technology for use onboard vehicles and is considered the most viable at short term approach, while the concept of storing hydrogen at sub-ambient temperatures will be explored as a long-term strategy. At present, most chemical storage systems incur unacceptable fuel costs due to the complexity of rehydrogenation of the hydrogen carrier materials.

Document US 2015/014323 A1 discloses a structural component with at least two side members has a support structure that includes a partition with multiple curved portions forming cells. The partition connects to the side members and extends between the side members at least partially along straight lines. The partition may extend along one or more straight lines from one side member to the other. One structural component is a container with a wall about the internal support structure. The container cells may be formed with a core structure. The core can include a permeable storage material and may be retained after formation, or may be removed. In some cases the container wall has generally planar surfaces, which may include surface undulations. Core structures are also provided for forming structural components. Formation can include casting a material about a core structure within a mold to form a partition extending between two or more sides.

The invention is set out in the appended set of claims.

### Brief Description of Figures

Figure 1 is a perspective of a unit spherical cell according to the present invention.
Figure 2 represents arrays of interconnected cells, stacked to form a platform.
Figure 3 shows a cross section of the platform, showing the periodic arrangement of the cells.
Figure 4 shows the general geometric layout of the architecture of a storage platform system for a vehicle application: 1 - Hydrogen storage platform; 2 - Vacuum insulation chamber; 3 - Conformal cooling; 4 - Collector accumulator chamber; 5 - Primary pressure regulating unit; 6 - Fuel Cell/ICE; 7 - Refueling chamber; 8- Refueling interface (temperature sensor, pressure relief valve, etc.); 9 - Refueling station; A - Feed line; B - Refueling line.
Figure 5 Shows arrangements of cells and voids among them.
Figure 6 Representation of conformal cooling and/or vacuum insulation chambers of storage platform: 2 - Vacuum insulation chamber: 3 - conformal cooling.

### Description of embodiments

Hydrogen has the highest energy per mass of any fuel; however, its low ambient temperature density results in a low energy per unit volume, requiring the development of advanced storage methods with higher energy density, which poses a considerable challenge for its widespread safe application, since, as described previously there are still many technical barriers and problems that have to be solved, requiring extensive research. The main challenges are related to safe storage of hydrogen at higher pressures, at adequate cost, higher gravimetric and volumetric capacity and smooth refueling and release flow during operation. The present invention aims to solve most of the challenges and research gaps summarized in Table 4.

The present invention is based on a modular cellular solid product platform system that stores the hydrogen (or any other gas) in interconnected unit cells at pressures exceeding 100 MPa. The shape of the cell will be spherical since the sphere is the geometrical shape that allows the largest volume to surface area ratio. The spherical cell shape also minimizes the membrane stresses when subjected to internal pressure and minimizes heat transfer due to high-volume-to-surface ratio. The cellular solid platform will be fabricated by additive and subtractive manufacturing, but other manufacturing processes could be envisaged such casting processes, injection moulding and others. The basic element of the invention concept is a Unit *Spherical Cell* (or polyheadral shape) that can perform various functions: storage of hydrogen, cooling and insulation.

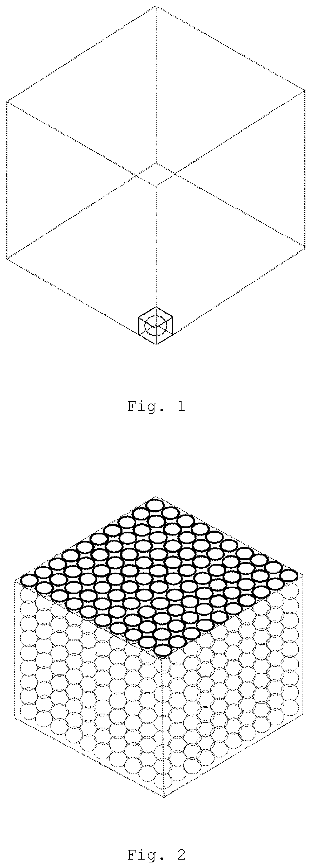

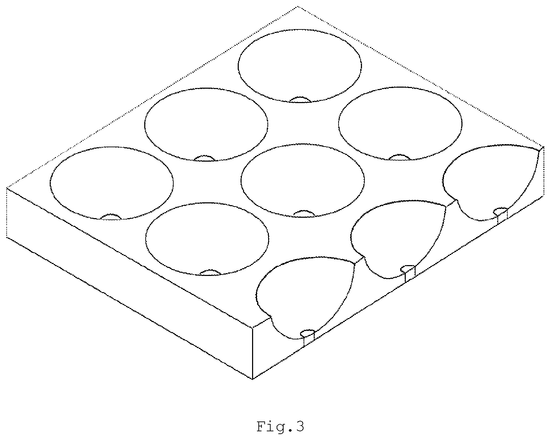

The storage product platform system (flat or other configuration) will be generated as a periodic cellular structure of Unit Spherical Cells or other shapes, as showed in Figure 1, which are arranged/stacked and interconnected in such a manner as to create a fuel storage apparatus with a configuration able to meet the target specifications of the product platform, and fit the packaging requirements of the intended use, as illustrated in Figure 2 and Figure 3.

The interconnected cells will be linked to collectors/accumulators, located at the top of the platform or other, that will act as pressure stabilizer of the gas/liquid, facilitating the flow both during refueling and operation (feeding the fuel cell or internal combustion engine). The platform can be composed of a single module/block or various modules supplying the hydrogen to the collector simultaneously or partially according to operation demand. The number, dimensions and shape of the cells will be defined through a topological optimization analysis, taking into account in particular, but not exclusively:
- Design for additive/subtractive manufacturing framework
- Total volume of hydrogen to be stored
- Strength of the cells for the system design pressure, in accordance with applicable standards
- Optimal flow rates of the gas during refilling and release during operation
- Architecture that optimizes the packaging of the storage platform into the body in white chassis of the vehicle or the other applications
- Number of modules or physical blocks forming the platform
- Integrated Conformal Cooling system in the case of compressed hydrogen to limit the temperature increase during refilling and operation of the system and during parking in the case of liquid/cryo-compressed hydrogen (improving dormancy period)
- Integration in the platform chambers for vacuum or other insulation systems when using liquid, cold and cryo-compressed hydrogen
- Integration of hydrogen pressure accumulators/stabilizing collectors for refueling and feeding the powertrain (fuel cell or combustion engine)
- Built in secondary safety functions (such as valves, flow meters, piping, and pressure regulating unit, temperature sensors) that control the flow of the hydrogen during the system operation and also any leakage due to malfunction of the system
- Flexural strength and/or crashworthiness of the storage platform and possible contribution for the structural integrity of the body in white of the vehicle

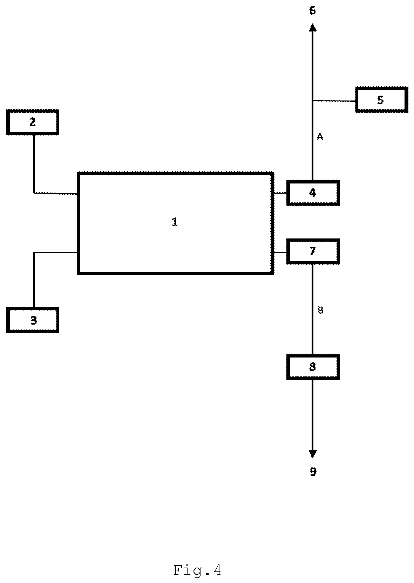

The embodiment of this invention concept can have an integral architecture to maximize performance, materialized and made possible by the use of additive/subtractive manufacturing processes, with many built in functions. However, some components can be fitted to the main platform as individual modules/physical blocks, such as the pressure regulating unit and other secondary safety devices required according to applicable standards. Figure 4 illustrates the general geometric layout of storage platform architecture, with schematic representation of pressure stabilizer collector.

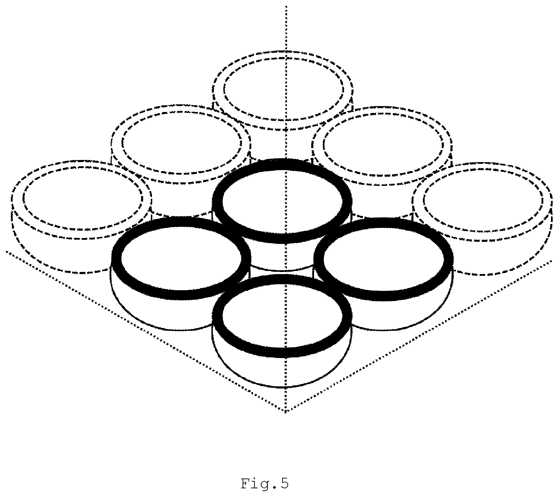

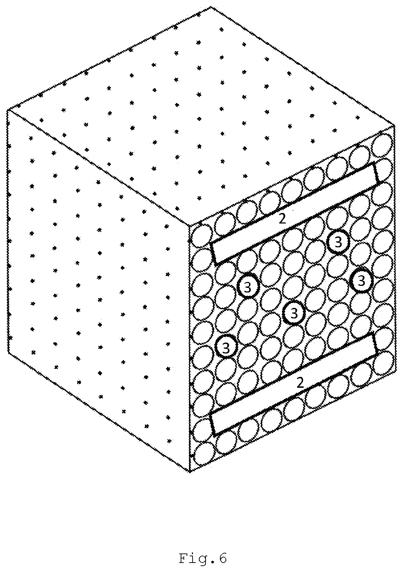

The following aspects of the embodiment of the invention are highlighted:
- The spaces among the *unit spherical cells* can be a void, as illustrated in figure 5 or can have a lattice structure (if a greater flexural strength is needed), to reduce its global weight and improve the gravimetric capacity of the storage system;
- The cells/spaces can be used to design and build into the platform the conformal cooling system and/or insulation chambers, as illustrated in figure 6;
- Since the additive manufacturing process allows many built in functions to be embedded into the system the number of parts will be decreased with a reduction of the Balance-of-Plant cost that can be of the order of 30%. Simultaneously the assembly cost will be reduced and reliability and durability increased;
- The platform can have a flat design which will make it easier to package into the body in white of the vehicle (contrary to current cylindrical tanks), especially if the body is *"designed around the storage platform"* as some OEMs are doing when fitting batteries packs in electric vehicles (Volskwagen,2020) .

In accordance with the present invention there is provided herein a gaseous fuel storage system according to claim 1.

Optionally the system may comprise a vacuum insulation chamber and/or a conformal cooling.

The spaces are filled with a lattice structure, to decrease weight of the platform and increase its stiffness and/or crashworthiness.

The unit cells can have different shapes and sizes. The system material is ferrous metals or non-ferrous metals or composites material or any combination thereof. The system material further comprises a plastic material and optionally a reinforcing material, wherein the reinforcing material is selected from the group consisting of carbon fibres, nylon fibres, kevlar fibres, aramid fibres and mixtures thereof.

In one embodiment, the gaseous fuel stored in the system is hydrogen, wherein the hydrogen can be in different forms such compressed gas, cold and cryo-compressed or liquid.

The hydrogen storage system comprises a vacuum insulation chamber when the hydrogen is in cold and cryo-compressed or liquid form.

The hydrogen storage system comprises a conformal cooling when the hydrogen is in compressed gaseous form.

The structure of unit cells interconnection and packaging can be adapted to fit vacuum insulation chamber and/or the conformal cooling.

The hydrogen storage system stores hydrogen that can be at pressures higher than 100 MPa.

The hydrogen stored in the hydrogen system is used to feed fuel cells or internal combustion engines.

The configuration of the interconnection of the unit cells of the gaseous fuel storage system allows that the interconnecting cells can act as buffers to dissipate energy in cases of sudden pressure increase during an accident or explosion.

The gaseous fuel storage system is used primarily in land transportation vehicles, in marine transportation vehicles, in aerospace transportation vehicles, in stationary stations, in buildings or portable applications.

The platform of the gaseous fuel storage system will have a planar configuration or other, optimized for easy packaging and integration.

Even though hydrogen was disclosed herein as one embodiment of gas to be stored in the presently disclosed system, the present invention is not limited to hydrogen storage. Other gases are equally able to be stored in the modular cellular solid gas storage platform system of the present application.

The present invention has been described in terms of general concept embodiment, upon which this disclosure is based, but engineers, experts in the field, can used them as a basis for designing other structure systems with other architectures, with different degrees of modularity, adapted to different applications and purposes. It should also be understood that the terminology used for the purpose of description of the invention, should not be regarded as limiting. This means that the scope of the invention is not interpreted as being limited by the schematic embodiments illustrated in the figures above. Other variations are possible within the scope of the present invention, as defined in the listed claims. It should also be noted that the drawings in the figures, illustrating the apparatus of the present invention are not to scale and are not in proportion, for purposes of clarity. The blocks and the schematic geometric layout as well as other elements in the figures are intended to represent functional relationships among those elements/blocks, rather than any physical connections/relationships/interfaces is intended.

### References

1.European Union Commission (2010) Regulation (EU) No 406/2010 implementing Regulation (EC) No 79/ 2009 of the European Parliament and of the Council on type-approval of hydrogen-powered motor vehicles
2. Kunze, K. (2012) Performance of a cryo-compressed hydrogen storage. In: Kunze K, editor. World hydrogen energy conference e WHEC; 2012. Toronto Canada
3. Kunze,K. (2014) BMW Hydrogen storage technology e current status and future trends. In: Kunze K, Kircher O, editors. European hydrogen energy conference e EHEC; 2014. Sevilla, Spain
4. Barthelemy,H. et al (2017) Hydrogen storage: Recent improvements and industrial perspectives, international journal of hydrogen energy 42, 7254-7262
5. Dolci,F. et al (2018) Research Priority Workshop on Hydrogen Safety, EUR 29146 EN ,JRC Conference and workshop ,26-27 September 2016 ,Petten, The Netherlands
6. Hua et al (2010), Technical Assessment of Compressed Hydrogen Storage Tank Systems for Automotive Applications, ANL 10/24, Argonne National Laboratory
7. ISO/TS 15869: 2009 (2009), Gaseous hydrogen and hydrogen blends-land vehicle fuel tank
8. Maus et al. (2008) Filling procedure for vehicles with compressed hydrogen tanks, international journal of hydrogen energy, 33, 4612-4621
9. QUANTUM (2020), Hydrogen cilinder specifications, https://www.qtww.com/product/hydrogen/ (accessed 26 august 2020)
10. Rivard et al. (2019), Hydrogen Storage for Mobility: A Review, Materials 2019, 12, 1973; doi:10.3390/ma12121973)
11. Saba Niaz et al. (2015) Hydrogen storage: Materials, methods and perspectives. Renewable and Sustainable Energy Reviews 50 ,457-469
12. Sankir,M. et al. (2018), Hydrogen storage technologies, John Wiley &Sons
13. Shirosh,N (2002) Hydrogen Composite Tank Program, Proceedings of the 2002 U.S. DOE Hydrogen Program Review, NREL/CP-610-32405
14. Stolten and Emonts (2016), Hydrogen Science and Engineering: Materials, Processes, Systems and Technology, First Edition.Wiley-VCH Verlag GmbH & Co. KGaA.
15. USDRIVE (2017) Hydrogen Storage Tech Team Roadmap, July
16. Volskwagen (2020), https://www.volkswagen-newsroom.com/en/modular-electric-drive-matrix-meb-3677, accessed 31 August 2020
17. Zheng, J. et al. (2012) Development of high pressure gaseous hydrogen storage technologies, international journal of hydrogen energy 37,1048-1057)
18. Zhou,Li (2005)Progress and problems in hydrogen storage methods, Renewable and Sustainable Energy Reviews 9, 395-408
19. Zhouri,B. (2019), Hydrogen Energy, Challenges and Solutions for a Cleaner Future, Springer, ISBN 978-3-319-93460-0

## Claims

1. Modular cellular solid gas storage platform system **characterized by** comprising:
- a modular cellular solid storage platform that comprises one or more modules fabricated with periodic cellular solids, wherein each module has a plurality of unit spherical cells suitable for storing a gaseous fuel, the unit cells are interconnected among them forming spaces among them; the interconnected unit cells are suitable to allow the flow of the gaseous fuel from one or more modules simultaneously according to operation demand;
wherein the unit cells of periodic cellular solids have a spherical shape, and the spaces are a void or have a lattice structure;
- a plurality of collectors located in the storage platform suitable to act as pressure stabilizers of the fuel;
wherein the interconnected unit cells are linked to the collectors;
- pressure relief valves suitable for avoiding pressure piling in the system;
- pressure regulating unit; temperature sensors,
- anchoring points suitable for assembly purposes.

2. Modular cellular solid gas storage platform system according to claim 1, wherein the system further comprises a vacuum insulation chamber and/or a conformal cooling.

3. Modular cellular solid gas storage platform system according to any preceding claim, wherein the spaces filled with a lattice structure are suitable to decrease weight of the platform and increase its stiffness and/or crashworthiness.

4. Modular cellular solid gas storage platform system according to any preceding claim, wherein the system material is ferrous metals or non-ferrous metals or composites material or any combination thereof.

5. Modular cellular solid gas storage platform system according to claim 4, wherein the system material further comprises a plastic material.

6. Modular cellular solid gas storage platform system according to claims 4 to 5, wherein the system material further comprises a reinforcing material.

7. Modular cellular solid gas storage platform system according to claim 6, wherein the reinforcing material is selected from the group consisting of carbon fibres, nylon fibres, kevlar fibres, aramid fibres and mixtures thereof.

8. Modular cellular solid gas storage platform system according to any preceding claim, wherein the gaseous fuel stored is hydrogen or any other gas.

9. Modular cellular solid gas storage platform system according to claim 8, wherein the hydrogen is in the form of a compressed gas, cold and cryo-compressed or liquid.

10. Modular cellular solid gas storage platform system according to any of the claims 8 and 9, wherein the system further comprises a vacuum insulation chamber when the hydrogen is in cold and cryo-compressed or liquid form.

11. Modular cellular solid gas storage platform system according to any of the claims 1 to 9, wherein the system further comprises a conformal cooling when the hydrogen is in compressed gaseous form.

12. Modular cellular solid gas storage platform system according to any preceding claim, wherein the structure of unit cells interconnection and packaging is adapted to fit vacuum insulation chamber and/or the conformal cooling.

13. Use of the modular cellular solid gas storage platform system described in any of the claims 1 to 11 in land transportation vehicles, in marine transportation vehicles, in aerospace transportation vehicles, in stationary stations, in buildings or portable applications.

## Patentansprüche

1. Modulares zellulares Festgas-Speicherplattformsystem, **dadurch gekennzeichnet, dass** es Folgendes umfasst:
- eine modulare zellulare Festgas-Speicherplattform, die ein oder mehrere Module umfasst, die aus periodisch zellularen Festkörpern gefertigt sind, wobei jedes Modul eine Vielzahl von sphärischen Einheitszellen zur Speicherung von gasförmigem Brennstoff aufweist, wobei die Einheitszellen miteinander verbunden sind und Zwischenräume zwischen ihnen bilden; die miteinander verbundenen Einheitszellen sind dazu geeignet, den Fluss des gasförmigen Brennstoffs von einem oder mehreren Modulen gleichzeitig entsprechend dem Betriebsbedarf zu ermöglichen;
wobei die Einheitszellen der periodischen zellularen Festkörper eine sphärische Form aufweisen und die Zwischenräume als Hohlräume ausgebildet sind oder eine Gitterstruktur aufweisen;
- eine Vielzahl von in der Speicherplattform angeordneten Sammlern, die dazu geeignet sind als Druckstabilisatoren des Brennstoffs zu dienen;
wobei die miteinander verbundenen Einheitszellen mit den Sammlern verbunden sind;
- Druckentlastungsventile, die dazu geeignet sind, einen Druckaufbau im System zu vermeiden;
- Druckregulierungseinheit; Temperatursensoren,
- Verankerungspunkte, die für Montagezwecken geeignet sind.

2. Modulares zellulares Festgas-Speicherplattformsystem nach Anspruch 1, wobei das System ferner eine Vakuum-Isolierkammer und/oder eine konforme Kühlung umfasst.

3. Modulares zellulares Festgas-Speicherplattformsystem nach einem der vorstehenden Ansprüche, wobei die mit einer Gitterstruktur gefüllten Zwischenräume dazu geeignet sind, das Gewicht der Plattform zu verringern und ihre Steifigkeit und/oder Aufprallsicherheit zu erhöhen.

4. Modulares zellulares Festgas-Speicherplattformsystem nach einem der vorstehenden Ansprüche, wobei das Systemmaterial aus Eisenmetallen oder Nichteisenmetallen oder Verbundwerkstoffen oder einer beliebigen Kombination davon besteht.

5. Modulares zellulares Festgas-Speicherplattformsystem nach Anspruch 4, wobei das Systemmaterial ferner ein Kunststoffmaterial umfasst.

6. Modulares zellulares Festgas-Speicherplattformsystem nach Ansprüchen 4 bis 5, wobei das Systemmaterial ferner ein Verstärkungsmaterial umfasst.

7. Modulares zellulares Festgas-Speicherplattformsystem nach Anspruch 6, wobei das Verstärkungsmaterial aus einer Gruppe bestehend aus Kohlefasern, Nylonfasern, Kevlarfasern, Aramidfasern und Mischungen davon ausgewählt ist.

8. Modulares zellulares Festgas-Speicherplattformsystem nach einem der vorstehenden Ansprüche, wobei der gespeicherte gasförmige Brennstoff Wasserstoff oder ein beliebiges anderes Gas ist.

9. Modulares zellulares Festgas-Speicherplattformsystem nach Anspruch 8, wobei der Wasserstoff in Form von komprimiertem Gas, kalt- und kryokomprimiertem Gas oder flüssig vorliegt.

10. Modulares zellulares Festgas-Speicherplattformsystem nach einem der Ansprüche 8 bis 9, wobei das System ferner eine Vakuum-Isolierkammer umfasst, wenn der Wasserstoff in Form von kaltem und kryokomprimiertem Gas oder flüssig vorliegt.

11. Modulares zellulares Festgas-Speicherplattformsystem nach einem der Ansprüche 1 bis 9, wobei das System ferner eine konforme Kühlung umfasst, wenn der Wasserstoff in Form von komprimiertem Gas vorliegt.

12. Modulares zellulares Festgas-Speicherplattformsystem nach einem der vorstehenden Ansprüche, wobei die Struktur der Verbindung und Anordnung der Einheitszellen so ausgelegt ist, dass sie in eine Vakuum-Isolierkammer und/oder eine konforme Kühlung passt.

13. Verwendung des modularen zellularen Festgas-Speicherplattformsystem, wie in einem der Ansprüche 1 bis 11 beschrieben, in Landfahrzeugen, in Wasserfahrzeugen, in Luft- und Raumfahrzeugen, in stationären Anlagen, in Gebäuden oder in tragbaren Anwendungen.

## Revendications

1. Système de plateforme de stockage de gaz solide cellulaire modulaire **caractérisé par** comprendre :
- une plateforme de stockage de gaz solide cellulaire comprenant un ou plusieurs modules fabriqués avec des structures cellulaires périodiques, dans lequel chaque module comporte une pluralité de cellules sphériques unitaires adaptées au stockage d'un combustible gazeux, les cellules unitaires sont interconnectées entre elles, formant des espaces entre ces dernières ; les cellules unitaires interconnectées sont adaptées pour permettre l'écoulement du combustible gazeux à travers un ou plusieurs modules simultanément, selon les besoins de fonctionnement ;
dans lequel les cellules unitaires des structures cellulaires périodiques ont une forme sphérique, et les espaces sont vides ou ont une structure en treillis ;
- une pluralité de collecteurs disposés dans la plateforme de stockage, adaptés pour agir comme stabilisateurs de pression du combustible ;
dans lequel les cellules unitaires interconnectées sont reliées aux collecteurs ;
- ses soupapes de décharge adaptées pour éviter une accumulation de pression dans le système ;
- une unité de régulation de pression ; des capteurs de température,
- des points d'ancrage adaptés aux opérations d'assemblage.

2. Système de plateforme de stockage de gaz solide cellulaire modulaire selon la revendication 1, dans lequel le système comprend en outre une chambre d'isolation sous vide et/ou un refroidissement conformal.

3. Système de plateforme de stockage de gaz solide cellulaire modulaire selon l'une quelconque des revendications précédentes, dans lequel les espaces remplis d'une structure en treillis sont adaptés pour réduire le poids de la plateforme et augmenter sa rigidité et/ou sa résistance à l'impact.

4. Système de plateforme de stockage de gaz solide cellulaire modulaire selon l'une quelconque des revendications précédentes, dans lequel le matériau du système est constitué de métaux ferreux, de métaux non ferreux ou de matériaux composites ou de toute combinaison de ceux-ci.

5. Système de plateforme de stockage de gaz solide cellulaire modulaire selon la revendication 4, dans lequel le matériau du système comprend en outre un matériau plastique.

6. Système de plateforme de stockage de gaz solide cellulaire modulaire selon les revendications 4 à 5, dans lequel le matériau du système comprend en outre un matériau de renforcement.

7. Système de plateforme de stockage de gaz solide cellulaire modulaire selon la revendication 6, dans lequel matériau de renforcement est choisi parmi le groupe constitué de fibres de carbone, de fibres de nylon, de fibres Kevlar, de fibres d'aramide et de leurs mélanges.

8. Système de plateforme de stockage de gaz solide cellulaire modulaire selon l'une quelconque des revendications précédentes, dans lequel le combustible gazeux stocké est de l'hydrogène ou tout autre gaz.

9. Système de plateforme de stockage de gaz solide cellulaire modulaire selon la revendication 8, dans lequel l'hydrogène est sous forme de gaz comprimé, de gaz froid et cryo-comprimé, ou de liquide.

10. Système de plateforme de stockage de gaz solide cellulaire modulaire selon l'une quelconque des revendications des revendications 8 et 9, dans lequel le système comprend en outre une chambre d'isolation sous vide lorsque l'hydrogène est sous forme de gaz froid et cryo-comprimé ou sous forme liquide.

11. Système de plateforme de stockage de gaz solide cellulaire modulaire selon l'une quelconque des revendications précédentes 1 à 9, dans lequel le système comprend en outre un dispositif de refroidissement conformal lorsque l'hydrogène est sous forme gazeuse comprimée.

12. Système de plateforme de stockage de gaz solide cellulaire modulaire selon l'une quelconque des revendications précédentes, dans lequel la structure d'interconnexion et de conditionnement des cellules unitaires est adaptée pour intégrer la chambre d'isolation sous vide et/ou le dispositif de refroidissement conformal.

13. Utilisation du système de plateforme de stockage de gaz solide cellulaire modulaire décrit dans l'une quelconque des revendications 1 à 11 dans des véhicules de transport terrestre, des véhicules de transport maritime, des véhicules de transport aérospatial, dans des stations fixes, dans des bâtiments ou dans des applications portables.
